# EUROPEAN PATENT SPECIFICATION

(11) **EP 0 842 689 B1**
(45) Date of publication and mention of the grant of the patent: **02.06.2004**
(21) Application number: 97118991.5
(22) Date of filing: 31.10.1997
(51) Int. Cl.: B01D 29/07, B01D 27/14

(54) **Filter element for filter unit**
Filterelement für Filtereinheit
Elément de filtre pour unité de filtre

(30) Priority: 14.11.1996 JP 30332396
(43) Date of publication of application: 20.05.1998
(73) Proprietor: Triple R Industry Co. Ltd., Tokyo (JP)
(72) Inventor: Moriya, Masayuki, c/o Triple R Ind. Co., Ltd., Shimotsuga-gun, Tochigi-ken (JP); Morinaga, Masaaki, c/o Triple R Ind. Co., Ltd., Shimotsuga-gun, Tochigi-ken (JP)
(74) Representative: Dr. Weitzel & Partner

(56) References cited:
- EP-B- 0 401 329
- GB-A- 733 689
- GB-A- 1 440 814
- GB-A- 2 168 262
- US-A- 4 048 071
- US-A- 4 277 262
- US-A- 4 976 852
- US-A- 5 556 543

## Description

The present invention relates to a filter element for a filter unit such as an oil filter unit that is disposed in an oil flow channel for lubricating oil circulated for supply in a vehicle engine, and which filters the lubricating oil.

Conventionally, filter elements for bypass-type oil filtering units typically use, as main components, filters formed into a cylindrical shape by winding filter paper in a multi-layered roll configuration, where the filter density is adapted to be uniform. The filters are disposed in an oil flow channel such that the axial direction of the filter is aligned to the oil flow direction, and capture and remove contaminants such as sludge, worn metal, and carbon in the lubricating oil.

In a filter element, the higher the density of filters through which the lubricating oil actually passes, the greater the amount of captured contaminants becomes. In contrast, however, the higher the density, the higher the flow resistance, and the less the fluid flow, i.e., the circulating efficiency, of the lubricating oil becomes. Conversely, the lower the filter density, the greater the circulating efficiency, but the smaller the amount of contaminants captured. While the filter density is to be determined taking into consideration the balance between the fluid flow of the lubricating oil and the amount of captured contaminants, conventional filter elements have been maintained to have uniform filter density, thereby often resulting in ensuring fluid flow but resulting in an insufficient amount of captured contaminants.

Oil filters comprising filter elements differing in density are known from the GB 1 440 814 and the EP 0 401 329 B1. However, the problem of a limited lifetime due to clogging and damage to the filters still persists.

The present invention made in view of the circumstances described above. Thus, an object of the present invention is to provide a filter element for a filter unit having high filtering performance while fluid flow therethrough is ensured.

In order to accomplish the object described above, the present invention provides a filter element characterized in comprising a plurality of filters having different density, the filters being placed in series in ascending order of density from the inflow side towards the discharge side of the fluid.

Additionally, the filter element according to the invention has a membrane-like filter sheet placed in between each adjacent ones of the filters for covering both of the opposed surfaces of the adjacent filters.

Furthermore, in the above arrangement, the filter element has absorbent powder mixed into one of the filters placed relatively near the inflow side.

Also, the present invention provides a filter element characterized in comprising a plurality of filters being placed in series from the inflow side towards the discharge side of the fluid, the fluid containing a plurality of different kinds of contaminants, the plurality of filters being suitable for capturing respective ones of the different kinds of contaminants.
FIG. 1 is a partial, cross-sectional perspective view of a filter element according to a according to the state of the art.
FIG. 2 is a partial, cross-sectional perspective view of a filter element according to a first embodiment of the present invention;
FIG. 3 is a partial, cross-sectional perspective view of a filter element according to a second embodiment of the present invention; and

The present invention is described in more detail below, using embodiments with reference to drawings attached hereto.

### (1) State of the art:

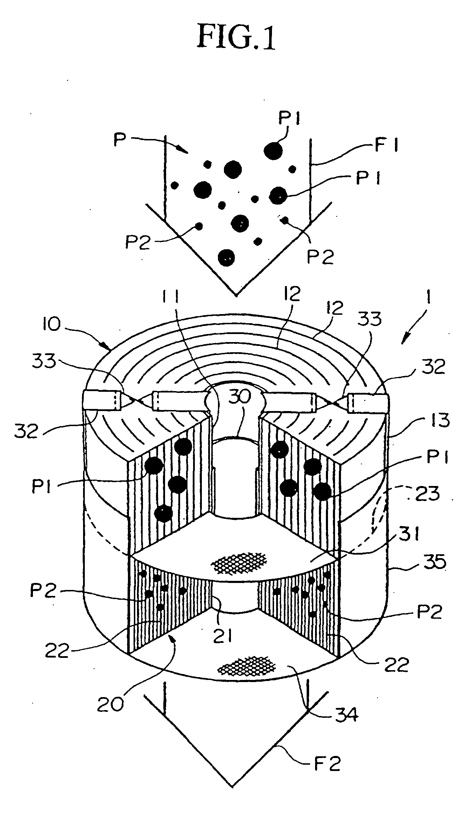

Fig. 1 shows a partial, cross-sectional perspective view of a filter element 1 for a lubricating oil filter unit, according to the state of the art.

This filter element 1 comprises a combination of a first filter 10 placed on the upstream side of the fluid flow channel, i.e., on the inflow side of liquid-to-be-filtered (fluid) F1, lubricating oil in this case, and a second filter 20 placed on the downstream side of the first filter 10, i.e., on the discharge side of the liquid-to-be-filtered F1. In the filter element 1 shown in FIG. 1, the liquid-to-be-filtered F1 flows in from the upper side, and, after passing through, is discharged to the lower side as filtered liquid F2.

The first filter 10 is arranged such that filter paper 12 made of a material, e.g., paper pulp, is wound around a cylindrical inner paper tube 11 to form a multi-layered roll configuration, and roll paper 13 is wound on the external circumferential surface of the wound roll of the filter paper 12 to maintain the roll-shaped state. On the other hand, the second filter 20 is also arranged in a similar way so that filter paper 22 is wound around a cylindrical inner paper tube 21 to form a multi-layered roll configuration, and roll paper 23 is wound on the external circumferential surface of the wound roll of the filter paper 22. For the first and the second filters 10 and 20, the size, i.e., the outer and inner diameters, and the height (axial length) thereof are identical.

The first and the second filters 10 and 20 differ in the densities thereof. That is, the filter paper 22 of the second filter 20 is wound for a greater number of turns than in the filter paper 12 of the first filter 10, but to the same outer diameter as the first filter 10, thereby being compressed as compared with the filter paper 12 of the first filter 10. Thus, the second filter 20 has higher density than that of the first filter 10. In other words, in this filter element 1, two filters of different densities, i.e., the first filter 10 and the second filter 20, are placed in series in ascending order of density from the inflow side towards the discharge side.

It is noted that filters of different density may also be obtained either by a method of winding filter paper of different densities for the same numbers of turns or by a method of combining this method just described and the method described above.

The first and the second filters 10 and 20 are maintained in a condition of being mutually axially stacked by having a cylindrical connecting paper tube 30 tightly fitted inside the inner tubes 11 and 21 of both of the filters. In addition, a ring-shaped supporting plate 31 made of, for example, metal mesh, is inserted in between both the filters 10 and 20. Furthermore, both of the filters 10 and 20 are coupled together by connecting both ends of each of a pair of cloth tapes 32 respectively wound around the upper end surface of the filter 10, the internal circumferential surface of the inner tubes 11, 30, and 21, the lower end surface of the second filter 20, and the external circumferential surface of the roll paper 13 and 23, under an appropriate tension, using each of a pair of z-shaped buckles 33, respectively. Finally, the filter element 1 is completed by pasting a filter membrane 34 of such as nonwoven fabric to the lower surface of the filter 20, and by fitting a cylindrical outer tube 35 of cardboard on the external circumferential surface of the filters 10 and 20 from the lower side of the second filter 20. It is noted that the height (axial length) of the outer tube 35 is approximately 2/3 the entire length of the filter element 1, and the lower end of the outer tube 35 coincides with the lower surface of the filter 20.

Next, the operation of a filter element 1 having the above arrangement is described.

As is well known, this filter element 1 is enclosed in a casing (not shown) having an inflow port and a discharge port for liquid-to-be-filtered F1, with the upper end of the first filter 10 facing the inflow port and the lower end of the second filter 20 facing the discharge port.

The liquid-to-be-filtered F1 that flowed into the casing, first enters into the filter paper 12 of the first filter 10 from the upper end or external surface of the first filter 10. Since the density of the first filter 10 is set relatively low, contaminants P such as sludge, worn metal, and carbon, entrained in the liquid-to-be-filtered F1, are securely taken or absorbed into the inside the first filter 10 without being deposited on the external surface of the first filter 10. It is noted that since the inflow end of the first filter 10 is not fitted with the outer tube 35, the density of that portion of the first filter 10 is further reduced, resulting in further enhanced absorbability for the contaminants P.

While the liquid-to-be-filtered F1 passes through the first filter 10, contaminant P1 of relatively large particle sizes matching the density of the first filter 10 is captured in the filter paper 12. Contaminants P2 of fine particle sizes not captured in the first filter 10 are not captured at this stage, but upon passing through the supporting plate 31, flows into the second filter 20 while entrained in the liquid-to-be-filtered F1. Then, while the liquid-to-be-filtered F1 passes through the second filter 20, the fine contaminant P2 that was not captured in the first filter 10, is captured by the filter paper 22. The liquid-to-be-filtered F1 that got rid of the contaminant P is discharged from the lower end or external surface of the second filter 20, as filtered liquid-to-be-filtered (or, in short, "filtered liquid") F2, and returns from the discharge port of the casing described above to the circulation channel

According to the filter element 1 of the present embodiment, as described above, in the course of the liquid-to-be-filtered F1 passing through the filter element 1, after the relatively large-particle contaminant P1 is captured by the first filter 10, the fine-particle contaminant P2 is captured by the second filter 20, whereby the filtering performance is improved.

In addition, since the large-particle contaminant P1 and the fine-particle contaminant P2 are deposited in the first and second filters 10 and 20, respectively, the density variation of filters caused by the contaminant P including P1 and P2 is not concentrated in either one of the filters 10 and 20, but is dispersed into both. Thus, increase in the flow resistance in the liquid-to-be-filtered F1 is prevented, and the fluidity of the liquid-to-be-filtered F1 in the filter element 1 is secured.

Next, first and second embodiments of the present invention will be described. It is noted that in the drawings referred to in the description of these embodiments, the same components as shown in FIG. 1 are similarly labeled, and description thereof will be omitted.

### (2) First Embodiment

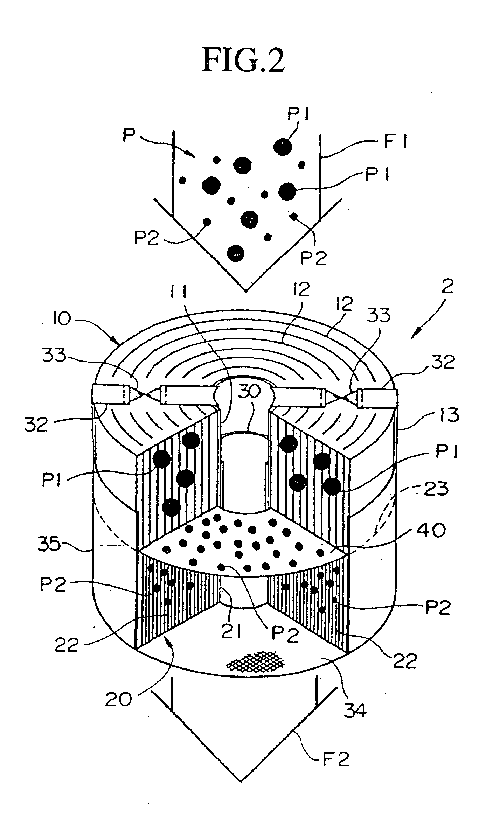

FIG. 2 shows a filter element 2, according to first embodiment of the present invention.

In this embodiment, instead of the supporting plate 31 described above, a thin middle filter membrane (membrane-like filter) 40 of nonwoven fabric is inserted in between the first and second filters 10 and 20. This middle filter membrane 40 is formed in a ring shape, and covers an entire area of both of the mutually opposed surfaces of the first and second filters 10 and 20.

In this case of the filter element 2, when the fine-particle contaminant P2 that passed through the filter element 1, flows into the second filter 20, the fine-particle contaminant P2 is uniformly dispersed by the middle filter membrane 40. Thus, the fine contaminant P2 is rendered such that it is unlikely that the contaminant P2 flows into the second filter 20 in an aggregated condition. As a result, damage, such as filter cracks caused by aggregated fine-particle contaminants P2 entering into the filter paper 22 constituting the second filter 20, is prevented, whereby the filtering performance of the second filter 20 is maintained for a long time.

### (3) Second Embodiment

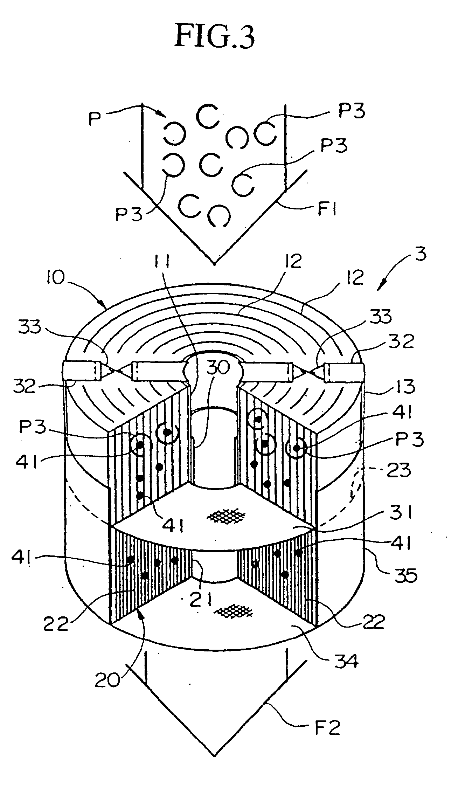

FIG. 3 shows a filter element 3, according to a second embodiment of the present invention.

In this embodiment, absorbent powder 41 is mixed into the filter paper 12 constituting the first filter 10 at an appropriate ratio. For this absorbent powder 41, in particular, such powder as capable of absorbing oxide sludge P3 in the liquid-to-be-filtered F1, is used. The oxide sludge P3 in the liquid-to-be-filtered F1 is captured by being absorbed to the absorbent powder 41, and is deposited in the first filter 10. On the other hand, the absorbent powder 41 that did not absorb the oxide sludge P3 flows into the second filter 20 that is not mixed with the absorbent powder 41, and is captured by the filter paper 22 of the second filter 20 to stay there. In FIG. 3, the absorbent powder 41 seen in the second filter 20 denotes the absorbent powder that flowed in from the first filter 10 and was captured by the filter paper 22.

In this case, since the density of the second filter 20 is high, the absorbent powder 41 remains in this second filter 20 and is deposited. As a result, the absorbent powder that did not absorb the oxide sludge P3, is prevented from flowing out from the filter element 3.

Fig. 3 shows a supporting plate 31, which is in accordance with the invention replaced by a membrane-like filter.

### (4) Variations and other applications of the invention:

Implementation of the present invention is not limited to each of the embodiments described above, but other variations such as shown below are possible.
1. The first to second embodiments described above use two filters, or two kinds of filters, as the filters of different density. However, any number of plurality of filters may be used as far as the requirements for the arrangement of the filter element are met that the plurality of filters are set to differ in the density thereof, and are placed in series in the ascending order of density from the inflow side towards the discharge side.
2. The first to second embodiments described above use filter paper 12 and 22, as the filter materials for filters 10 and 20. However, the filter materials are not limited to this but may be selected from any number of a materials most suitable for capturing the contaminants P contained in the liquid-to-be-filtered F1.
3. The filter elements in the embodiments described above are all for filtering the lubricating oil. However, the present invention is applicable to any filter elements for handling any of various liquids, such as sewage water.

## Claims

1. A filter element for a filter unit disposed in a flow channel of a liquid-to-be-filtered for filtering contaminants contained in said liquid-to-be-filtered;
1.1 comprising a plurality of filters each of which is wound to form a multi-layered roll configuration;
1.2 said filters have different densities and
1.3 said filters are placed in series in the ascending order of density from the inflow side towards the discharge side of said liquid and
1.4 said filters have a membrane-like filter placed in between each adjacent ones of said filters for covering both of the mutually opposed surfaces of said adjacent filters, whereby the membrane-like filter disperses the contaminants uniformly and prevents contaminants to pass in an aggregated condition to the following filter in the downstream direction.

2. A filter element for a filter unit according to claim 1, **characterized in** having absorbent powder mixed into one of said filters placed relatively near said inflow side, and being followed by a filter which holds back the absorbent powder which escapes from the preceding filter.

## Patentansprüche

1. Ein Filterelement für eine Filtereinheit, welche in einem Strömungskanal einer Flüssigkeit, die gefiltert werden soll, angeordnet ist, zum Filtern von Verunreinigungen, welche in der gesagten Flüssigkeit, die gefiltert werden soll, beinhaltet sind;
1.1 umfassend eine Vielzahl von Filtern, wobei jeder derselben gewunden ist, um eine mehrschichtige Walzenkonfiguration auszubilden;
1.2 die gesagten Filter weisen unterschiedliche Dichten auf, und
1.3 die gesagten Filter sind in Reihe in der ansteigenden Reihenfolge der Dichte von der Einströmseite in Richtung der Abgabeseite der gesagten Flüssigkeit angeordnet, und
1.4 die gesagten Filter weisen einen membranähnlichen Filter auf, welcher zwischen alle einzelne benachbarte der gesagten Filter positioniert ist, um beide der sich gegenseitig gegenüberstehenden Oberflächen der gesagten benachbarten Filter abzudecken, wobei der membranähnliche Filter die Verunreinigungen gleichförmig verteilt und verhindert, dass Verunreinigungen in einem angehäuften Zustand zu dem nachfolgenden Filter in der stromabwärtigen Richtung hindurchtreten.

2. Ein Filterelement für eine Filtereinheit gemäß Anspruch 1, **dadurch gekennzeichnet, dass** es ein absorbierendes Pulver aufweist, welches in einen der gesagten Filter, welcher relativ nahe zu der gesagten Strömungsinnenseite angeordnet ist, hineingemischt wird, und welchem Filter ein Filter folgt, welcher das absorbierende Pulver, das von dem vorhergehenden Filter ausströmt, zurückhält.

## Revendications

1. Elément filtrant pour une unité filtrante disposée dans un canal d'écoulement d'un liquide à filtrer pour éliminer par filtration les contaminants contenus dans ledit liquide à filtrer,
1.1 comprenant une pluralité de filtres dont chacun est bobiné de façon à former une configuration en rouleau à couches multiples ;
1.2 lesdits filtres ont des densités différentes et
1.3 lesdits filtres sont placés en série selon un ordre de densité ascendant à partir du côté d'admission vers le côté de décharge dudit liquide et
1.4 lesdits filtres sont pourvus d'un filtre semblable à une membrane, placé entre chacun des filtres adjacents parmi lesdits filtres pour couvrir les deux surfaces mutuellement opposées desdits filtres adjacents, de sorte que le filtre semblable à une membrane disperse les contaminants uniformément et empêche les contaminants de passer en une forme agglomérée jusqu'au filtre suivant dans la direction aval.

2. Elément filtrant pour une unité filtrante selon la revendication 1, **caractérisé en ce qu'**il comprend une poudre absorbante mélangée dans l'un desdits filtres placé relativement près dudit côté d'admission, et qui est suivi d'un filtre qui retient la poudre absorbante qui s'échappe du filtre précédent.
